# EUROPÄISCHE PATENTSCHRIFT

(11) **EP 1 165 224 B1**
(45) Veröffentlichungstag und Bekanntmachung des Hinweises auf die Patenterteilung: **18.09.2002**
(21) Anmeldenummer: 00931014.5
(22) Anmeldetag: 07.04.2000
(51) Int. Cl.: B01J 3/00, B01J 19/00, B01J 19/24, B01J 19/26

(54) **VERFAHREN UND VORRICHTUNG ZUR DURCHFÜHRUNG CHEMISCHER UND PHYSIKALISCHER PROZESSE**
METHOD AND DEVICE FOR CARRYING OUT CHEMICAL AND PHYSICAL PROCESSES
PROCEDE ET DISPOSITIF POUR LA REALISATION DE PROCESSUS CHIMIQUES ET PHYSIQUES

(30) Priorität: 08.04.1999 DE 19915721; 03.08.1999 DE 19935611; 27.08.1999 DE 19940784; 17.09.1999 DE 19944781; 02.12.1999 DE 19958132; 11.02.2000 DE 10006087; 21.02.2000 DE 10007861; 06.03.2000 DE 10010300
(43) Veröffentlichungstag der Anmeldung: 02.01.2002
(73) Patentinhaber: Penth, Bernd, 66822 Lebach (DE)
(72) Erfinder: Penth, Bernd, 66822 Lebach (DE)
(74) Vertreter: Vièl, Christof, Dipl.-Ing.
(86) Internationale Anmeldenummer: DE0001061
(87) Internationale Veröffentlichungsnummer: WO00061275

(56) Entgegenhaltungen:
- WO-A-00/23181
- GB-A- 2 063 695
- US-A- 2 770 501
- US-A- 4 470 727
- US-A- 4 908 154

## Beschreibung

Die Erfindung betrifft ein Verfahren und eine Vorrichtung zur Durchführung chemischer und physikalischer Prozesse.

Bislang bekannte Verfahren zur Durchführung chemischer und physikalischer Prozesse erfordern jeweils speziell auf die jeweilige Aufgabenstellung zugeschnittene Vorgehensweisen und darauf abgestimmte Vorrichtungen. So können nach den bekannten Vorgehensweisen die nachfolgenden Verfahrenstechniken nicht mit der gleichen Apparatur und gleichzeitig jeweils optimalem Ergebnis durchgeführt werden:
- chemische Reaktionen in Mikroreaktortechnik zwischen Mehrstoffsystemen mit extrem guter Durchmischung. verstopfungsfrei (ohne Fouling) und optimalen Ausbeuten,
- Initiieren physikalischer und chemischer Reaktionen unter Ausnutzung von durch die Verfahrensführung bedingter Kavitation, wie Keramisierung und Ablauf chemischer Reaktionen im Kollisionspunkt,
- Homogenisierung, Dispergierung, Emulgierung, Sterilisierung und Zellaufschluß,
- Mikronisicrung und Coating.

Aufgabe der Erfindung ist es, ein Verfahren und eine Vorrichtung zu schaffen, um diese Prozesse mit besserem Ergebnis und in der gleichen Apparatur durchführen zu können.

Diese Aufgabe wird erfindungsgemäss dadurch gelöst, dass zum Initiieren chemischer oder physikalischer Prozeßabläufe mindestens zwei flüssige Medien über Pumpen, vorzugsweise Hochdruckpumpen, durch jeweils eine Düse in einen von einem Reaktorgehäuse umschlossenen Reaktorraum auf einen gemeinsamen Kollisionspunkt gespritzt werden, dass über eine Öffnung in den Reaktorraum ein Gas, eine verdampfende Flüssigkeit, eine kühlende Flüssigkeit oder ein kühlendes Gas zur Aufrechterhaltung der Gasatmosphäre im Reaktorinneren, insbesondere im Kollisionspunkt der Flüssigkeitsstrahlen, bzw. zur Kühlung der entstehenden Produkte eingeleitet wird und dass die entstehenden Produkte und überschüssiges Gas durch eine weitere Öffnung aus dem Reaktorgehäuse durch Überdruck auf der Gaseintrittseite oder durch Unterdruck auf der Produkt- und Gasaustrittseite entfernt werden.

Vorteilhafte Ausgestaltungen des erfindungsgemäßen Verfahrens ergeben sich aus den Unteransprüchen 2 bis 4.

Nachfolgend werden die voranstehend aufgeführten einzelnen Verfahrenstechniken besprochen.

Bei existierenden Mikroreaktoren bislang bekannter Bauart werden die Edukte unter anderem durch alternierend versorgte Mikrokanäle zugeführt und in einem darauf senkrecht stehenden Schlitz vermischt und zur Reaktion gebracht. Daher reagieren nach Ablauf der vorgesehenen Reaktionszeit beim Abstellen der Produktzuführung die Edukte in den Reaktorkanälen (da diese nach wie vor im Kontakt miteinander verbleiben) zu reaktorverblockenden Rückständen weiter.

Im erfindungsgemäßen Mikroreaktor stehen die Edukte nicht nur nicht im direkten Kontakt, vielmehr werden die Reaktionsprodukte nach gewünschtem Reaktionsende und Abstellen der Eduktzuführungen durch die Gaszuführung vollständig entleert. Die Eduktausgänge bleiben vollständig räumlich voneinander getrennt. Auch die in den bislang bekannten Mikroreaktortypen stattfindenden Fouling- und Verblockungsprobleme während des Betriebes können nicht auftreten, da die Reaktionskammer, bzw. deren Ausgang so gestaltet ist, dass keine engen Räume auftreten.

Das Verfahren kann dabei so durchgeführt werden, dass exotherm ablaufenden Reaktionen die beim Aufeinandertreffen der Strahlen auftretende thermische Energie entzogen wird. Dies kann dadurch geschehen, dass das Reaktorgehäuse mit einer Kühlung versehen wird. Wesentlich effizienter kann jedoch die Kühlung der Reaktionsedukte und vor allem aber der temperaturerhöhten Reaktionsprodukte im Reaktorgehäuse derart gestaltet werden, dass über zumindest eine zusätzliche Bohrung dem Reaktorgehäuse eine Kühlflüssigkeit oder ein Kühlgas zugeführt wird. Dabei kann der Aggregatszustand des Kühlmediums temperaturbedingt oder druckbedingt oder temperatur- und druckbedingt sein. Es kann sich also beispielsweise um Wasser, um Kohlendioxid, um Ammoniak oder Stoffe mit ähnlichem Aggregatsverhalten untererhöhtem Druck handeln, wobei der Übergang des Kühlmediums vom flüssigen in den gasförmigen Zustand im Reaktor selbst dadurch stattfinden kann, dass die bei der Reaktion freiwerdende Wärme den Wechsel des Aggregatszustandes bewirkt.. Es ist aber auch eine Ausführung möglich, bei der die Verdunstungskälte eines aus einer Druckgasflasche austretenden Gases, wie z.B. Kohlendioxid dadurch genutzt wird, dass der Reaktorinnendruck mittels des Druckhalteventils unterhalb des Druckes der Druckgasflasche gehalten wird oder dass auf ein Druckhalteventil verzichtet wird.

Der besondere Vorteil aus der Durchführung solcher Reaktionen im Kollisionspunkt von aus den Edukten gebildeten Mikrostrahlen ergibt sich
- aus der intensiven Vermischung der Edukte im Kollisionspunkt, bedingt durch die für das Verfahren typische Feinheit der Strahlen und deren hoher Aufprallgeschwindigkeit,
- aus der guten Kühlbarkeit der entstehenden Produkte, bedingt durch das relativ große Verhältnis von Oberflächen zu Volumina der Flüssigkeiten, vor allem der bei der Kollision entstehenden feinen Tröpfchen und resultierenden guten Produktausbeuten durch Vermeidung von "hot spots",
- aus den trotz feiner Düsen zu erzielenden hohen Stoffumsätzen, bedingt durch die hohe Strahlgeschwindigkeit als Folge hoher Drücke,
- aus der trotz hoher Strahlgeschwindigkeiten niedrigen Kavitation an Materialwänden durch Verlagerung des Kollisionspunktes in den Gasraum.

Der Energieinhalt der flüssigen Medien kann auch durch Erhöhen des Pumpendruckes auf über 3000 bar und der daraus resultierenden erhöhten Strahlgeschwindigkeit von über 2 - facher Schallgeschwindigkeit so weit gesteigert werden, dass durch die beim Zusammenprall der Strahlen im Kollisionspunkt auftretende hydrodynamische Kavitation Energie für den Ablauf physikalischer und chemischer Reaktionen frei wird.

Ein wesentlicher Aspekt der vorliegenden Erfindung ist der Einsatz der erfindungsgemäßen Anordnung zur Herstellung nanoskaliger Keramikpartikel. Dabei kreuzen sich die aus zwei oder mehreren Düsen austretenden Flüssigkeiten im gemeinsamen Schnittpunkt. Die in den Flüssigkeiten gelöst oder emulgiert vorliegendenen Reagenzien reagieren dabei zu einem Fällungsprodukt. Statt durch Fällung können die zu keramisierenden Metalloxide oder Metalloxidhydrate auch durch anodisches Auflösen von Metall in einem geeigneten Elektrolyten entstchen.

Durch die im erfindungsgemäßen Verfahren im Reaktormittelpunkt stattfindende Umwandlung der kinetischen Energie in Kavitationskräfte findet eine Keramisierung der entstandenen, zunächst amorphen Metalloxidhydrate statt. Die amorphen Metalloxidhydrate, die im amorphen Zustand ganz allgemein leicht zum Agglomerieren oder gar zum Aggregieren untereinander neigen, werden durch das Verfahren also gleichzeitig zerkleinert und keramisiert, wobei optional Tenside die vor dem Keramisieren große Tendenz zum Agglomerieren zusätzlich verhindern. Mit dem erfindungsgemässen Verfahren ist die preiswerte und reaktorschonende Herstellung von Mischmetalloxiden, also keramischen Partikeln, die verschiedene metallische Elemente im Gitter tragen, möglich, welche gleichzeitig hohe Phasenreinheiten besitzen. Diese sind damit hervorragend z.B. als Katalysatoren und Halbleitermaterialien für die Elektronikindustrie geeignet. Beispiele hierfür sind Supraleiter oder Piezomaterialien.

Ziel und erreichter Zweck ist also die Verwendung des erfindungsgemäßen Verfahrens zur Herstellung von feinsten, metalloxidhaltigen Niederschlägen und deren gleichzeitige Stabilisierung durch Keramisierung unter Ausnutzung der hohen Kavitationskräfte. Dieses Prinzip der Stoffumwandlung oder Stoffumsetzung durch den im Gasraum befindlichen Kollisionspunkt wird erfindungsgemäß auch auf andere physikalische und chemische Stoffumsetzungen angewendet. Besonders aussichtsreich ist diese Vorgehensweise für Stoffumsetzungen, die unter Überwindung einer Energiebarriere auf ein niedrigeres Gesamtenergieniveau fallen. Es können mit dieser Vorgchensweise demnach katalytisch ablaufende Prozesse unterstützt werden, wobei die Katalysatormenge reduziert wird oder auf den Einsatz von Katalysatoren verzichtet werden kann.

Der besondere Vorteil aus der Durchführung solcher Reaktionen im Kollisionspunkt von aus den Edukten gebildeten Mikrostrahlen hoher Geschwindigkeit im Gasraum ergibt sich
- aus der Möglichkeit, neue chemische und physikalische Umsetzungen durchzuführen,
- aus der intensiven Vermischung der Edukte im Kollisionspunkt; bedingt durch die für das Verfahren typische Feinheit der Flüssigkeitsstrahlen und deren hoher Aufprallgeschwindigkeit,
- aus der guten Steuerbarkeit der einzutragenden Energie durch die Wahl des Druckes und der daraus resultierenden Strahlgeschwindigkeit,
- aus der trotz feiner Düsen zu erzielenden hohen Stoffumsätze, bedingt durch die hohe Strahlgeschwindigkeit als Folge hoher Drücke,
- aus der trotz hoher Strahlgeschwindigkeiten niedrigen Kavitation an den Reaktorwänden durch Verlagerung des Kollisionspunktes in den Reaktorraum,
- durch die Führung der Flüssigkeitsstrahlen in einem Gasraum, was zu der Vermeidung von Energieverlusten durch das Abbremsen der Strahlen in einem flüssigen Medium führt.

Es ist möglich, dass es sich bei den aus den verschiedenen Düsen austretenden Flüssigkeiten um die gleichen oder aber ineinander mischbare Lösungsmittel handelt oder aber, dass diese Flüssigkeiten miteinander Emulsionen bilden.

Es ist möglich, dass die in den Flüssigkeiten befindlichen Reagenzien in diesen Flüssigkeiten entweder gelöst, emulgiert oder dispergiert vorliegen.

Bei zumindest einer der Flüssigkeiten kann es sich um eine instabile Emulsion handeln, deren Emulsionsstabilität nur kurzzeitig aufrechterhalten wird und diese Emulsionsstabilisierung durch Umwälzen durch die erfindungsgemäße Anordnung geschieht.

Möglich ist auch, dass es sich bei zumindest einer der Flüssigkeiten um eine Dispersion handelt, wobei die dispergierten Stoffe nach dem beschriebenen Verfahren zerkleinert, deagglomeriert, disaggregiert oder homogenisiert werden. Dabei kann es sich um organische, anorganische oder organisch-anorganische Inhaltsstoffe handeln.

Der besondere Vorteil aus der Durchführung solcher Reaktionen im Kollisionspunkt von aus den Edukten gebildeten Mikrostrahlen hoher Geschwindigkeit ergibt sich
- aus der intensiven Zerkleinerung oder Homogenisierung der Edukte im Kollisionspunkt, bedingt durch die für das Verfahren typische Feinheit der Strahlen und deren hoher Aufprallgeschwindigkeit.
- der trotz feiner Düsen zu erzielenden hohen Stoffumsätze, bedingt durch die hohe Strahlgeschwindigkeit als Folge hoher Drücke
- des trotz hoher Strahlgeschwindigkeiten niedriger Kavitation an Materialwänden durch Verlagerung des Kollisionspunktes in den Gasraum

Es ist möglich, dass es sich bei zumindest einer der Flüssigkeiten um eine Flüssigkeit mit temporär gelösten Inhaltsstoffen handelt, wobei die Inhaltsstoffe im Reaktor ausfallen, auskristallisieren oder eine Phasentrennung durchlaufen und mittels einer weiteren in den Reaktor eingespritzten Flüssigkeit oder der in der Flüssigkeit enthaltenen Inhaltsstoffe an einem weiteren Größenwachstum durch chemische oder physikalische Effekte gehindert werden. Unter einem physikalischen Effekt wird in diesem Zusammenhang das Coaten der Oberfläche entstehender oder auskristallisierender Partikel oder separierender Tröpfchen verstanden, wobei das Coaten dem Verhindern eines weiteren Größenwachstums, dem Schutz gegen weitere Reaktionen im Reaktor, dem Schutz gegen weitere Reaktionen außerhalb des Reaktors, so wie der Oxidation des fertigen Produktes an der Luft dienen kann. Die temporäre Lösung der Inhaltsstoffe kann dadurch herbeigeführt worden sein, dass die gelösten Inhaltsstoffe vor dem Einspritzen in den Reaktorraum thermisch gelöst wurden.

Sofern die dabei entstehenden Produkte emulgiert oder dispergiert vorliegen sollen, kann es sinnvoll sein, zur Stabilisierung dieser Emulsionen oder Dispersionen zusätzlich Tenside zu verwenden. Sinnvoll kann die Verwendung zweier tensidstabilisierter Wasser-in-Öl - Mikrocmulsionen sein. Dabei befinden sich die reaktionsfähigen Reagenzien in den jeweiligen, emulgicrtcn Wassertröpfchen der beiden Emulsionen. Beim Zusammentreffen der kinetisch energiereichen Flüssigkeitsstrahlen werden die Tröpfchen zunächst stark zerkleinert. Durch den Stoffaustausch von jeweils mindestens zwei der zerkleinerten Emulsionströpfchen, also dem gelösten, reaktiven Inhalt der Wasserphasen, bildet sich daraus jeweils ein etwas größeres Emulsionströpfchen mit dem Reaktionsprodukt aus den beiden ursprünglichen Tröpfchen.

Gegenstand der vorliegenden Erfindung ist auch die Herstellung sogenannter "mikronisierter" Produkte. Gegenüber dem Stand der Technik gelangt man so beispielsweise zu mikronisiertem β-Karotin. Dabei werden Edukte, die in einer der Zuführlanzen unter Druck heiß gelöst wurden durch den Zusammenprall mit einer geeigneten, z.B. mit Schutzkolloiden versehenen, kühleren Flüssigkeit, gleichzeitig im Stadium der kleinsten, ausfallenden Kristallen schockartig mit einer weiteres Wachstum verhindernden Schicht, im Falle des zuvor in Alkohol oder einem anderen Lösungsmittel heiß gelösten ß-Karotin, mit einer hydrophilisierenden Gelatineschicht überzogen.

Diese Vorgehensweise wird dabei jeweils angepaßt auf den jeweiligen Anwendungsfall in Chemie, Pharmazie, Medizin oder Kosmetik.

Zusammenfassend ist festzuhalten, daß durch die in der erfindungsgemäßen Anordnung im Strahlenschnittpunkt stattfindende Umwandlung der kinetischen Energie in Scher- und Kavitationskräfte mehrere Ziele in Lösungen, Emulsionen, Dispersionen und Suspensionen erreicht werden sollen:
- Durchführung chemischer und physikalischer Reaktionen bei inniger Durchmischung von Reaktionskomponenten ohne Reaktorverstopfung,
- zusätzlicher Eintrag von Energie zur Durchführung chemischer und physikalischer Reaktionen und Umwandlungsprozesse bei gleichzeitiger inniger Durchmischung von Reaktionskomponenten,
- Homogenisierung, Emulgierung, Teilchenzerkleinerung, Disaggregation, Deagglomeration, Zellaufschluß, Sterilisierung ohne Materialverschleiß,
- Herstellung mikronisierter, gecoateter Produkte.

Zur Durchführung des erfindungsgemäßen Verfahrens wurde eine Vorrichtung zur Durchführung chemischer und physikalischer Prozesse geschaffen, wobei mindestens zwei Düsen mit jeweils zugeordneter Pumpe und Zuführleitung zum Spritzen von jeweils einem flüssigen Medium in einen von einem Reaktorgehäuse umschlossenen Reaktorraum auf einen gemeinsamen Kollisionspunkt vorgesehen sind, dass eine erste Öffnung in dem Reaktorgehäuse vorgesehen ist, durch die ein Gas, eine verdampfende Flüssigkeit, eine kühlende Flüssigkeit oder ein kühlendes Gas zur Aufrechterhaltung der Gasatmosphäre im Reaktorinneren, insbesondere im Kollisionspunkt der Flüssigkeitsstrahlen, bzw. zur Kühlung der entstehenden Produkte einleitbar ist, und dass eine weitere Öffnung zum Entfernen der entstehenden Produkte und von überschüssigem Gas aus dem Reaktorgehäuse vorgesehen ist.

Vorteilhafte Ausgestaltungen dieser Vorrichtung ergeben sich aus den Unteransprüchen 6 bis 16.

Optional wird der Reaktor als Mikroreaktor ausgelegt, der durch sein großes Verhältnis von Oberfläche zu Reaktorvolumen eine rasche Abfuhr überschüssiger Energie ermöglicht. Die Wände des Reaktionsbehälters sind in diesem Fall so ausgelegt, dass der Transport der thermischen Energie durch Kühlmedien oder Heizmedien erfolgt, die günstigerweise in einem separaten Kreislauf gerührt werden.

Der Reaktor ist neben den als Düsen gestalteten Eintrittsöffnungen nicht nur mit einem Produktablauf versehen, sondern enthält auch zumindest noch einen weiteren Eingang, der das Begasen zur Aufrechterhaltung einer vorgegebenen Atmosphäre im Reaktor ermöglicht. Hierbei kann es sich um Inertgas, aber auch um ein gasförmiges Reagens handeln. Der Produktablauf ist mit einem geregelten Druckhalteventil versehen, so dass der Reaktorinnendruck auf einem Level gehalten werden kann, bei dem das Gas im flüssigen, oder überkritischen oder unterkritischen Zustand vorliegt.

Der Reaktor kann als Zweistrahlreaktor, Dreistrahlreaktor oder Mehrstrahlreaktor ausgeführt werden. Charakteristisch für die vorliegende Erfindung ist eine Prozeßführung, bei der die kollidierenden Strahlen in einem Gasraum aufeinandertreffen. Dies bedeutet, dass der Kollisionspunkt, in dem die Strahlen aufeinandertreffen, nicht an einer Gefäßwand oder einer Rohrwand anliegt.

Der Reaktor kann auf seinem Außenmantel thermostatisierbar ausgelegt sein, so dass überschüssige Energie, die aus der Reaktion selbst oder aus der Kavitationsenergie entsteht, abgeführt werden kann oder dass zusätzliche Energie zugeführt werden kann.

Dabei treffen sich im Falle einer Zwei-Strahl-Anordnung zwei Strahlen von aus zwei Düsen austretenden Flüssigkeiten in einem gemeinsamen Kollisions- oder Kavitationspunkt. Die hydrodynamische Energie der Strahlen führt dabei am Kollisionspunkt der Flüssigkeits- oder Lösungsmittelstrahlen in Abhängigkeit von den eingesetzten Substanzen und der Geschwindigkeit der Strahlen zum Auftreten hoher Scher- und Kavitationskräfte. Die in den Flüssigkeiten gelösten, emulgierten oder dispergierten Reagenzien homogenisieren oder reagieren dabei chemisch oder physikalisch zu dem gewünschten Endprodukt.

Die Zufuhr zusätzlicher Energie kann statt im Reaktor in einer oder mehreren der eduktzuführenden Leitungen geschehen.

Die Zufuhr zusätzlicher Energie ist nützlich, wenn z.B. schlecht lösliche aber thermisch empfindliche Eduktkomponenten in einem der Eduktstrahlen gelöst werden sollen um zeitlich in sehr kurzem Abstand danach im Reaktor abgekühlt und die dabei wieder ausfallenden oder auskristallisierenden Kristalle oder Tröpfchen während des Abkühlens mit einer aus einer weiteren Düse stammenden Komponente fixiert werden soll. Durch die Wahl eines sehr engen Durchmessers der produktzuführenden, geheizten Lanze kann so die Verweilzeit des empfindlichen Produktes bei erhöhter Temperatur niedrig gehalten werden.

Die gewählte Temperatur kann grundsätzlich, wegen des hohen Druckes in der Lanze, erheblich über dem Siedepunkt des Lösungsmittels bei Raumtemperatur liegen. Als Lösungsmittel kommen demnach auch Medien als Lösungsmittel in Frage, die bei Raumtemperatur als Gase vorliegen.

Wesentlicher Inhalt der vorliegenden Erfindung ist die technische Ausführung der Düsenanordnung und deren Betrieb. Diese Anordnung ist in jedem Fall so gestaltet, dass der Zusammenprall zweier, dreier oder mehrerer Flüssigkeitsstrahlen und die daraus resultierende Kavitation im materialfernen Raum stattfindet. Die beiden Strahlen haben demnach zur Zeit und am Ort ihrer Kavitation jeweils das strahlbildende Rohr oder sonstige Druckbehältnis hin zum Reaktor, dessen Innendruck über ein Druckhalteventil und die Zufuhr von Gas auf einem vorbestimmbaren Level gehalten wird, durch eine Düse bereits verlassen und kollidieren als freie Strahlen im Gasraum. Ziel der Verlagerung der Kavitation in einen materialfernen Raum ist dabei die Verhinderung von Materialverschleiß, wie er dort regelmäßig auftritt, wo Kavitation an Materialwänden stattfindet. Unter "materialfern" wird dabei verstanden, dass in der Umgebung des Kollisionspunktes der Strahlen eine gasförmige Atmosphäre aufrechterhalten wird. Wesentlicher Inhalt der vorliegenden Erfindung ist insbesondere auch die Tatsache, dass die kollidierenden Strahlen durch die umgebende Gasatmosphäre vor ihrem Zusammenprall nicht bereits durch das Vorhandensein einer umgebenden Flüssigkeit abgebremst werden können.

Erfindungsgemäß ist eine Ausführung weiterhin so gestaltet, dass in dieser Anordnung zwei Düsen auf einen gemeinsamen Kollisionspunkt fest justiert sind und dadurch eine nachträgliche Justierung der Düsen auf einen gemeinsamen Kollisionspunkt nicht möglich und auch nicht erforderlich ist.

Erfindungsgemäß ist eine weitere Ausführung so gestaltet, dass in dieser Anordnung die Düsen auf einen gemeinsamen Kollisionspunkt justierbar sind. Dies geschieht dadurch, dass die düsentragenden Lanzen in einer justierbaren Vorrichtung gelagert sind. Der Reaktor ist in diesem Fall so ausgeführt, dass er zumindest zwei Eintrittsöffnungen, bevorzugt drei Eintrittsöffnungen im Winkel von 120 Grad in etwa der gleichen Ebene besitzt, die gegen die Lanzen mit Dichtungen abgedichtet werden. Weiterhin besitzt der Reaktor einen Produktablauf, ein Druckhalteventil, eine Gaszuführung und eine Öffnung zur Prozeßkontrolle, z.B. mittels eines Endoskopes.

Die verwendeten Düsen bestehen aus einem möglichst harten und dadurch verschleißarmen Material. Hierfür kommen Keramiken, wie Oxide, Carbide, Nitride oder Mischverbindungen in Frage, wobei insbesondere Aluminiumoxid, vorzugsweise als Saphir oder Rubin, aber auch Diamant besonders geeignet ist. Es kommen als Hartstoffe auch Metalle, insbesondere gehärtete Metalle in Frage.

Erfindungsgemäß kann dazu zwischen beiden Hartstoffscheiben eine als Abstandshalter dienende Scheibe gebracht werden, die entweder ebenfalls aus Hartstoff, aber auch aus einem anderen Material, bevorzugt einem Metall bestehen kann. Dieser Abstandshalter kann erfindungsgemäß derart gestaltet sein, dass er gleichzeitig als Fassung für die Hartstoffscheiben dient.

Im folgenden werden beispielhafte Ausführungen der Erfindung anhand von Zeichnungen erläutert.

Es zeigen
- Fig. 1 und 1b: technische Ausführungen eines Düsenkörpers,
- Fig. 2: ein Ausführungsbeispiel für einen Düsenkörper,
- Fig. 3. Fig. 4 und Fig. 5: andere Ausführungsbeispiele von Düsenkörpern,

Zwei Düsensteine (10), die z.B. aus Saphir, Rubin oder Diamant bestehen, sind mit aufeinandergerichteten Bohrungen (1) versehen, welche als Düsen dienen. Die Bohrungen (1) haben einen Durchmesser von 0,5 µm - 2000 µm, bevorzugt von 10 µm - 500 µm, besonders bevorzugt von 50 µm - 200 µm. Die Düsensteine (10) sind eingebettet in einen metallischen Körper (11), der mit zwei Bohrungen (3, 22) versehen ist. Die Bohrungen (3, 22) des metallischen Körpers (11) haben Durchmesser, die ein Mehrfaches des Durchmessers der Bohrungen (1) der Düsensteine (10) betragen und die Bohrung (22) fluchtet mit den Bohrungen (1) der Düsensteine (10). Die technische Ausführung der Einbettung der Düsen erfolgt nach dem Stand der Technik. Die Bohrung (3) des metallischen Körpers (11) ist um 90 ° zu der Bohrung (22) angeordnet und dient dem Ablauf der Reaktionsprodukte. Im (nicht materiell existierenden) Kollisions- oder Kavitationspunkt (25) treffen sich im praktischen Betrieb demnach die beiden durch die Düsen (1) gebildeten Strahlen des durch Pumpen (nicht dargestellt) durch die Düsensteine (10) geförderten flüssigen Mediums und verlassen nach ihrer Umwandlung, die eine Änderung physikalischer und/oder chemischer Eigenschaften darstellen kann, den metallischen Körper (11) durch die Bohrung (3), in dem ein Druckhalteventil (nicht dargestellt) eingebaut ist. Über das gegenüberliegende Ende der Bohrung (3) wird optional zusätzlich Gas zugeführt. Dieses Gas dient als Inertgas zum Freihalten des durch die beiden Bohrungen gebildeten Gasraumes von Flüssigkeit, kann aber auch alternativ oder zusätzlich als Reaktionsgas dienen.

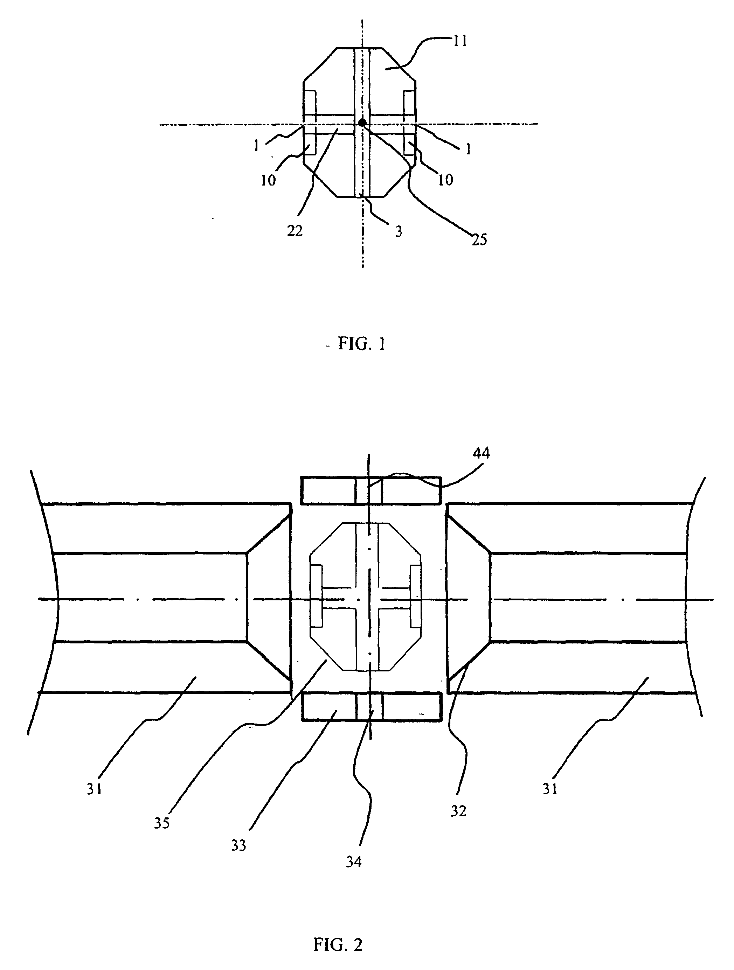

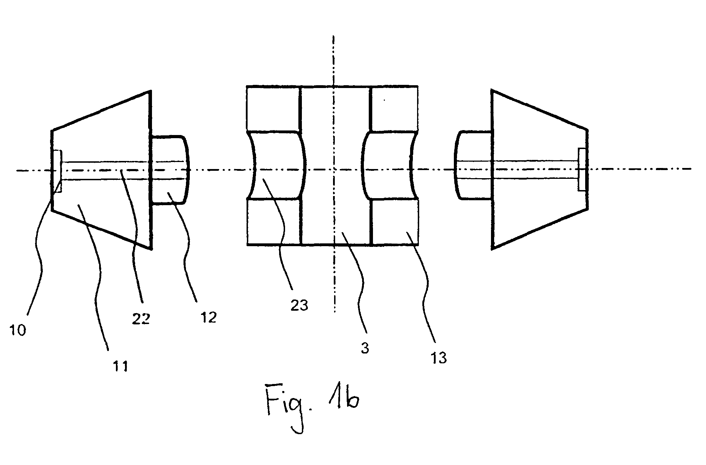

Eine weitere Ausführung (Fig. 1b) besteht aus der Kombination zweier handelsüblicher Wasserstrahlschneiddüsen (11) mit einem Düsenaufnehmer (13). Die Wasserstrahlschneiddüsen (11), bestehen aus jeweils einem Düsenkörper und einem in den Düsenkörper eingebetteten Düsenstein (10). wobei die Düse jeweils mit dem Düsenausgang (12) in die Bohrung (23) eines Düsenaufnehmers (13) integriert ist. Die axiale Bohrung (22) der Wasserstrahlschneiddüsen (11) weist einen Durchmesser auf, der ein Mehrfaches der Bohrung (1) des Düsensteins (10) beträgt. Der Düsenaufnchmer (13) ist neben der Bohrung (23) für die Aufnahme der Düsen mit einer zusätzlichen, senkrecht dazu angeordneten Bohrung (3) versehen, die der Gaszuführung und gegenüberliegend der Produktabführung dient. Der Düsenaufnehmer bildet zusammen mit den beiden Düsen den Gesamt-Düsenkörper.

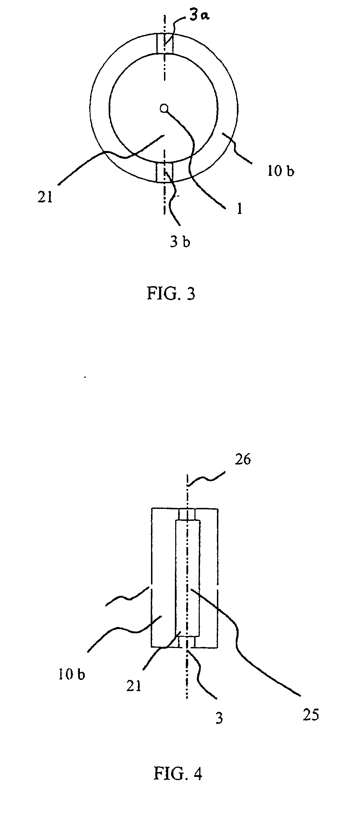

Die Anordnung kann alternativ, wie in FIG. 3 und FIG. 4 dargestellt, so gestaltet sein, dass statt des Düsensteins (10) zwei Hartstoffscheiben (10 b), die jeweils zumindest eine als Düse dienende Bohrung (1) tragen, in der Ebene (26) direkt aufeinandergepreßt werden, wobei die Bohrungen (1), über beide Hartstoffscheiben (10 b) betrachtet, durchgängig sind, sich also jeweils exakt gegenüberliegen. Weiterhin tragen beide Hartstoffscheiben (10 b) auf der gemeinsamen --Berührungsfläche (26) jeweils eine Vertiefung (21), die dafür sorgt, dass die im Kollisionspunkt (25) stattfindende Kavitation nur innerhalb der flüssigen Phase in umgebender Gasphase stattfindet und somit nicht materialabtragend wirken kann. Weiterhin besitzt die erfindungsgemäße Anordnung einen seitlichen Ablauf der aus der Kavitation im Kollisionspunkt (25) hervorgegangenen Produkte. Dieser Ablauf kann derart gestaltet sein, dass zumindest eine der beiden Hartstoffscheiben mit zumindest einer seitlichen Bohrung oder zumindest einer seitlichen Ablaufrille (3), sowie einer gegenüberliegendenGaszuführung (3) versehen ist. Diese Ausführung gilt also für den Fall, dass die beiden Hartstoffscheiben ohne Abstandshalter direkt aufeinandergebracht werden.

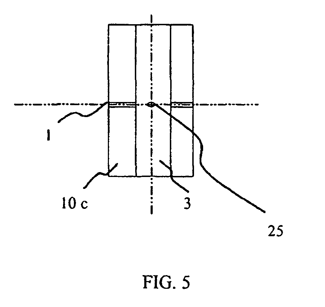

Eine weitere Ausführung der vorliegenden Erfindung sieht die Herstellung und Verwendung eines einzigen Hartstoffkörpers nach FIG. 5 vor. Dies geschieht dadurch, dass in einen Hartstoffkörper (10 c) zwei sich kreuzende Bohrungen (1, 3) eingebracht werden. Dabei unterscheiden sich die beiden Bohrungen in ihrem Durchmesser derart, dass die Bohrung für die Düsen (1) zur Zuführung der Flüssigkeitsstrahlen zum Kollisionspunkt zumindest auf einer Teillänge einen kleineren Durchmesser als die zur seitlichen Gaszuführung und zum seitlichen Abtransport der Reaktionsprodukte aus den kollidierten Strahlen vorgesehene Bohrung (3) aufweist. Der so hergestellte Hartstoffkörper (10 c) wird in einen geeigneten metallischen Düsenkörper eingebettet.

Den Einbau der Düsen in handelsübliche Hochdruckapparatur zeigt Fig. 2. Zwei in der Wasserstrahlschneidetechnik übliche Rohrlanzen (31) mit konischen Enden und jeweils einem Gewinde auf der Außenseite werden mittels einer Doppelmuffe (33) unter Einschluß des entgegengesetzt konischen Düsenkörpers (35) zusammengeschraubt. Die Abdichtung der Rohrlanzen (31) gegen den Düsenkörper (35) erfolgt metallisch an den Flanken (32) der konischen Metallflächen. Zur Ableitung des im Düsenkörper (35) gebildeten Produktes ist die Doppclmuffe (33) mit einer produktableitenden Bohrung (34) versehen. In die produktableitende Bohrung (34) kann ein Druckhalteventil zur Aufrechterhaltung eines definierbaren Gegendruckes in der Kavitationszone integriert sein. Über die Bohrung (44) wird Gas zugeführt.

Die temporäre Lösung der Inhaltsstoffe kann dadurch herbeigeführt worden sein, dass die gelösten Inhaltsstoffe vor dem Einspritzen in den Reaktorraum thermisch gelöst werden. Dabei kann beispielsweise die Rohrlanze (31) als Heizrohr dienen.

Eine weitere Ausführung der vorliegenden Erfindung sieht die Verwendung zumindest zweier, bevorzugt dreier, oder mehrerer handelsüblicher mit Düsen bestückter Lanzen, wie sie in der Wasserstrahlschneidetechnik üblicherweise verwendet werden, vor, durch welche Flüssigkeit in ein Reaktorgehäuse auf einen in einer Gasatmosphäre befindlichen, gemeinsamen Kollisionspunkt eingespritzt wird. Die Lanzen sind dabei justierbar gelagert. Dieser Reaktor besitzt zusätzlich einen mit einem Druckhalteventil versehenen Produktablauf und eine Gaszuführung zum Aufrechterhalten der Gasatmosphäre.

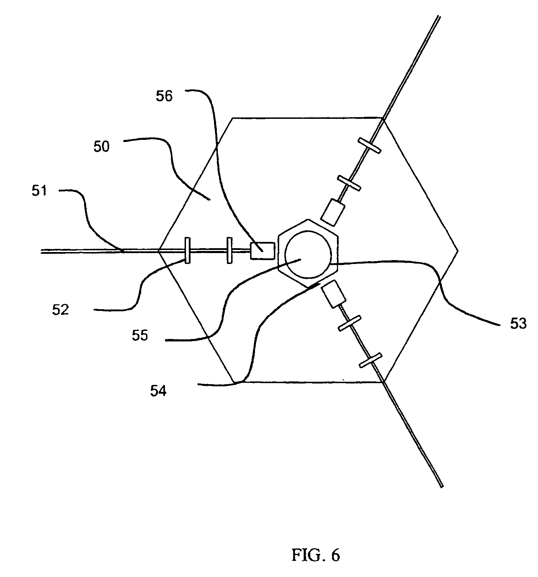

In FIG. 6 ist eine derartige Ausführung abgebildet. Drei Lanzen (51) sind mit justierbaren Lagern (52) auf einer Platte (50) in einem Winkel von 120° zueinander fixiert. In der Mitte der Anordnung befindet sich das eigentliche Reaktorgehäuse (53), welches mit Bohrungen in Richtung der auf den Lanzen (51) befindlichen Düsen versehen ist. Der Innenraum (55) des Reaktorgehäuses (53) ist mit einem Produktausgang (nach unten) und einer Gaszuführung, die sich im Deckel des Reaktorgehäuses (53) befinden kann, versehen.

## Patentansprüche

1. Verfahren zur Durchführung chemischer und physikalischer Prozesse, **dadurch gekennzeichnet, dass** zum Initiieren chemischer oder physikalischer Prozeßabläufe mindestens zwei flüssige Medien über Pumpen, vorzugsweise Hochdruckpumpen, durch jeweils eine Düse (1) in einen von einem Reaktorgehäuse umschlossenen Reaktorraum auf einen gemeinsamen Kollisionspunkt (25) gespritzt werden, dass über eine Öffnung (3 a) in den Reaktorraum ein Gas, eine verdampfende Flüssigkeit, eine kühlende Flüssigkeit oder ein kühlendes Gas zur Aufrechterhaltung der Gasatmosphäre im Reaktorinneren, insbesondere im Kollisionspunkt (25) der Flüssigkeitsstrahlen, bzw. zur Kühlung der entstehenden Produkte eingeleitet wird und dass die entstehenden Produkte und überschüssiges Gas durch eine weitere Öffnung (3) aus dem Reaktorgehäuse durch Überdruck auf der Gaseintrittseite oder durch Unterdruck auf der Produkt- und Gasaustrittseite entfernt werden.

2. Verfahren gemäß Anspruch 1, **dadurch gekennzeichnet, dass** die flüssigen Medien unter einem Druck von mehr als 50 bar, bevorzugt mehr als 500 bar, besonders bevorzugt von 1.000 bis 4.000 bar in den Reaktorraum gespritzt werden.

3. Verfahren gemäß Anspruch 1, **dadurch gekennzeichnet, dass** durch materialferne Verlagerung des Kollisionspunktes Materialverschleiß an den inneren Oberflächen des Reaktors vermindert bzw. vermieden wird.

4. Verfahren gemäß Anspruch 1, **dadurch gekennzeichnet, dass** es sich bei den chemischen oder physikalischen Prozessen um
- Durchführung chemischer oder physikalischer Reaktionen bei inniger Durchmischung der Reaktionskomponenten,
- Reaktionsführung mit zusätzlichem Energieeintrag durch flüssigkeitsinterne Kavitation oder kavitationsähnlicher Energieform oder
- Homogenisierung in einer oder verschiedenen Flüssigkeiten emulgierter, suspendierter, agglomerierter, aggregierter oder dispergierter Stoffe, Zellaufschluß oder Sterilisierung,
- Herstellung mikronisierter, oberflächengecoateter oder oberflächenmodifizierter Produkte
handelt.

5. Vorrichtung zur Durchführung chemischer und physikalischer Prozesse, **dadurch gekennzeichnet, dass** mindestens zwei Düsen (1) mit jeweils zugeordneter Pumpe und Zuführleitung zum Spritzen von jeweils einem flüssigen Medium in einen von einem Reaktorgehäuse umschlossenen Reaktorraum auf einen gemeinsamen Kollisionspunkt (25) vorgesehen sind, dass eine erste Öffnung (3 a) in dem Reaktorgehäuse vorgesehen ist, durch die ein Gas, eine verdampfende Flüssigkeit, eine kühlende Flüssigkeit oder ein kühlendes Gas zur Aufrechterhaltung der Gasatmosphäre im Reaktorinneren, insbesondere im Kollisionspunkt (25) der Flüssigkeitsstrahlen, bzw. zur Kühlung der entstehenden Produkte einleitbar ist, und dass eine weitere Öffnung (3 b) zum Entfernen der entstehenden Produkte und von überschüssigem Gas aus dem Reaktorgehäuse vorgesehen ist.

6. Vorrichtung gemäß Anspruch 5, **dadurch gekennzeichnet, dass** die erste Öffnung (3a) mit der weiteren Öffnung (3 b) fluchtet.

7. Vorrichtung gemäß Anspruch 5, **dadurch gekennzeichnet, dass** die Pumpen Hochdruckpumpen sind, wobei ein Druck von mehr als 50, vorzugsweise von mehr als 500 bar, besonders bevorzugt von 1.000 bis 4.000 bar erreichbar ist.

8. Vorrichtung gemäß Anspruch 5, **dadurch gekennzeichnet, dass** die Düsen (1) keramische Düsen oder Diamantdüsen sind.

9. Vorrichtung gemäß Anspruch 5, **dadurch gekennzeichnet, dass** der Düsendurchmesser kleiner als 2 mm, vorzugsweise kleiner als 0,5 mm, besonders vorzugsweise kleiner als 0,3 mm ist.

10. Vorrichtung gemäß Anspruch 5, **dadurch gekennzeichnet, dass** die beiden Düsen (1) in den gegenüberliegenden Seiten eines einzigen Düsenkörpers (11) derart eingebettet sind, dass die Düsen (1) direkt aufeinandergerichtet sind und eine erste, axiale Bohrung (22) in dem Düsenkörper (11) mit gegenüber den Düsendurchmessern mehrfach größerem Durchmesser die beiden Düsen (1) verbindet, und dass an dem Düsenkörper (11) eine weitere, radiale Bohrung (3 a, 3 b) mit ebenfalls gegenüber den Düsendurchmessern mehrfach größerem Durchmesser vorgesehen ist.

11. Vorrichtung gemäß Anspruch 5, **dadurch gekennzeichnet, daß** ein Düsenaufnehmer (13) vorgesehen ist, der eine erste Bohrung (23) aufweist, in die beidseits Düsen (1), bestehend aus jeweils einem Düsenkörper und einem darin eingebetteten Düsenstein (10) eingesetzt werden und daß eine um 90° zu der ersten Bohrung (23) versetzte zweite Bohrung (3) in dem Düsenaufnehmer (13) vorgesehen ist.

12. Vorrichtung gemäß Anspruch 10 oder 11, **dadurch gekennzeichnet, dass** der Düsenkörper (11) an den beiden mit Düsen (1) bestückten Seiten konisch ausgebildet ist und zwischen zwei in der Wasserstrahlschneidetechnik üblichen Rohrlanzen (31) mit konischen Enden mittels einer Doppelmuffe (33) befestigt ist und dass die Doppelmuffe (33) zur Ableitung des im Düsenkörper gebildeten Produktes mit einer produktableitenden Bohrung (34) vorgesehen ist.

13. Vorrichtung gemäß Anspruch 5, **dadurch gekennzeichnet, dass** die flüssigen Medien über Pumpen durch zwei aus Hartstoffscheiben (10 b) gebildete Düsen (1) in einem gemeinsamen Kollisionspunkt (25) zur Reaktion gebracht werden, wobei die beiden Düsen (1) direkt aufeinandergepreßt werden und die beiden Düsen (1), über beide Hartstoffscheiben (10 b) betrachtet, durchgängig sind und die beiden Hartstoffscheiben (10 b) auf den sich berührenden Flächen jeweils eine Vertiefung tragen und parallel zu den Flächen einen seitlichen Ablauf (3) besitzen.

14. Vorrichtung gemäß Anspruch 5, **dadurch gekennzeichnet, dass** die zwei flüssigen Medien über Hochdruckpumpen in einem aus einer Hartstoffscheibe (10 c) gebildeten Düsenkörper in einem gemeinsamen Flüssigkeitsschnittpunkt zur Reaktion gebracht werden, wobei die Hartstoffscheibe (10 c) zwei sich kreuzende Bohrungen (1, 3) mit unterschiedlichen Durchmessern aufweist, wobei die dünnere Bohrung (1) ein von den beiden Seiten zu betreibendes Düsenpaar bildet und die dickere Bohrung (3), die durchgängig oder eine Sackbohrung sein kann, dem Ablauf der Reaktionsprodukte dient und dass der so gebildete Düsenkörper in einen metallischen Düsenkörper eingebettet ist.

15. Vorrichtung gemäß Anspruch 5, **dadurch gekennzeichnet, dass** das Reaktorgehäuse thermostatisierbar ist.

16. Vorrichtung gemäß Anspruch 5, **dadurch gekennzeichnet, dass** die Zuführleitungen und/oder die Düsen thermostatisierbar ausgelegt sind.

## Claims

1. A method for carrying out chemical and physical processes, **characterised in that** to initiate chemical or physical reaction processes, at least two liquid media are squirted - each through a nozzle (1) - by means of pumps, preferably high-pressure pumps, into a reactor space enclosed by a reactor casing, with the two jets meeting at a common collision point (25), and that a gas, a vaporising liquid, a cooling liquid or a cooling gas is introduced via an opening (3 a) into the reactor space to uphold the gaseous atmosphere in the interior of the reactor, especially at the collision point (25) of the jets of liquid, or to cool the reaction products, and that the reaction products as well as excess gas are removed from the reactor casing via an additional opening (3) by means of overpressure on the gas entry side or by means of underpressure on the product and gas exit side.

2. The method of claim 1, **characterised in that** the liquid media are squirted into the reactor space under a pressure of more than 50 bar, preferably more than 500 bar, best of all 1,000 to 4,000 bar.

3. The method of claim 1, **characterised in that** by transferring the collision point to a material-remote location, material wear on the inside surfaces of the reactor is reduced or prevented.

4. The method of claim 1, **characterised in that** the chemical or physical processes involve
- carrying out chemical or physical reactions with intensive mixing of the reaction components
- conducting reactions with additional energy input by means of liquid-internal cavitation or an energy form similar to cavitation
- homogenisation of substances emulsified, suspended, agglomerated, aggregated or dispersed in one or various liquids, cell decomposition or sterilisation,
- production of micronised, surface-coated or surface-modified products

5. A device for carrying out chemical and physical processes, **characterised in that** at least two nozzles (1) - each with its own pump and feed line - for squirting one liquid medium in each case into a reactor space enclosed by a reactor casing are provided, with the two jets meeting at a common collision point (25), and that in the reactor casing a first opening (3 a) is provided through which a gas, a vaporising liquid, a cooling liquid or a cooling gas can be introduced to uphold the gaseous atmosphere in the interior of the reactor, especially at the collision point (25) of the jets of liquid, or to cool the reaction products, and that an additional opening (3 b) is provided for removal of the reaction products and of excess gas from the reactor casing.

6. The device of claim 5, **characterised in that** the first opening (3a) is in alignment with the other opening (3 b).

7. The device of claim 5, **characterised in that** the pumps are high-pressure pumps with a pressure capability in excess of 50 bar, preferably in excess of 500 bar, best of all from 1,000 to 4,000 bar.

8. The device of claim 5, **characterised in that** the nozzles (1) are ceramic or diamond nozzles.

9. The device of claim 5, **characterised in that** the nozzle diameter is smaller than 2 mm, preferably smaller than 0.5 mm, best of all smaller than 0.3 mm.

10. The device of claim 5, **characterised in that** the two nozzles (1) are embedded on opposite sides of a single orifice insert (10) in such manner that the nozzles (1) point directly at each other and a first axial through-hole (22) - with a diameter that is larger than the nozzle diameters by a multiple thereof- in the orifice insert (10) connects the two nozzles (1), and that the orifice insert (10) is provided with an additional, radial hole (3 a, 3 b) which likewise has a diameter that is larger than the nozzle diameters by a multiple thereof.

11. The device of claim 5, **characterised in that** a nozzle holder (13) is provided, which has a first through-hole (23) into each end of which nozzles (1) - each consisting of a nozzle body and, embedded therein, an orifice insert (10) - are inserted, and that the nozzle holder (13) has a second through-hole (3) which runs perpendicular to the first through-hole (23).

12. The device of claim 10 or 11, **characterised in that** on the two sides fitted with nozzles (1), the nozzle body (11) is conical and is anchored by means of a double socket (33) between two conical-ended tube lances (31) of the kind common in waterjet machining, and that the double socket (33) is provided with a through-hole (34) for discharging the reaction product formed in the nozzle body.

13. The device of claim 5, **characterised in that** the liquid media are conveyed by means of pumps to a common collision point (25) at which they react through two nozzles (1) formed in hard material discs (10 b), the two nozzles (1) being pressed directly together and the two nozzles (1) - viewed across both hard material discs - being interconnected, and both of the two hard material discs (10 b) being recessed at their mutual contact surfaces and having a lateral outlet (3) parallel to the surfaces.

14. The device of claim 5, **characterised in that** the two liquid media are conveyed by means of high-pressure pumps to the point of intersection of the two jets at which they react situated in a nozzle body, the nozzle body being formed from a single hard material disc (10 c), the hard material disc (10 c) having two intersecting holes (1,3) with different diameters, the narrower hole (1) forming a nozzle pair operated from both sides and the wider hole (3), which can be engineered as a through-hole or a blind hole, being for the discharge of the reaction products, and that the nozzle body thus formed is embedded in a metallic nozzle body.

15. The device of claim 5, **characterised in that** the reactor casing can be thermostated.

16. The device of claim 5, **characterised in that** the feed lines and/or the nozzles are engineered such that they can be thermostated.

## Revendications

1. Procédé pour la réalisation de processus chimiques et physiques, **caractérisé en ce que** pour initier le déroulement de processus chimiques ou physiques au moins deux fluides liquides sont projetés par des pompes, de préférence des pompes à haute pression, chacun au travers d'une buse (1), en un point de collision commun (25) dans une chambre de réacteur entourée par un boîtier de réacteur, **en ce qu'**un gaz, un liquide en évaporation, un liquide de refroidissement ou un gaz de refroidissement est introduit par une ouverture (3a) dans la chambre de réacteur pour maintenir l'atmosphère gazeuse à l'intérieur de réacteur, en particulier au point de collision (25) des jets de liquide, et **en ce que** les produits formés et les gaz en excès sont éliminés hors du boîtier de réacteur par une ouverture supplémentaire (3) en appliquant une surpression du côté de l'entrée des gaz ou une sous-pression du côté de la sortie des gaz et du produit.

2. Procédé selon la revendication 1, **caractérisé en ce que** les fluides liquides sont projetés dans la chambre de réacteur sous une pression supérieure à 50 bar, de préférence supérieure à 500 bar, notamment de préférence comprise entre 1 000 et 4 000 bar.

3. Procédé selon la revendication 1, **caractérisé en ce que** l'usure du matériau sur les surfaces intérieures du réacteur est réduite ou évitée en déplaçant le point de collision loin du matériau.

4. Procédé selon la revendication 1, **caractérisé en ce que** les processus chimiques ou physiques réalisés sont
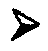 la réalisation de réactions chimiques ou physiques en mélangeant intimement les composants de la réaction,
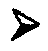 la réalisation de réactions avec apport d'énergie supplémentaire par cavitation interne de liquide ou par des formes d'énergie semblables à la cavitation ou
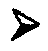 l'homogénéisation de matières émulsifiée, en suspension, agglomérées, agrégées ou dispersées dans un ou plusieurs liquides, la digestion cellulaire ou la stérilisation,
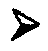 la fabrication de produits micronisés, enduits en surface ou modifiés en surface.

5. Dispositif pour la réalisation des processus chimiques et physiques, **caractérisé en ce qu'**il est prévu au moins deux buses (1) avec chacune une pompe et une conduite d'introduction pour projeter chacune un fluide liquide en un point de collision commun (25) dans une chambre de réacteur entourée par un boîtier de réacteur, **en ce qu'**une première ouverture (3a) est prévue dans le boîtier de réacteur au travers de laquelle un gaz, un liquide en évaporation, un liquide de refroidissement ou un gaz de refroidissement peut être introduit pour maintenir l'atmosphère gazeuse à l'intérieur du réacteur, en particulier au point de collision (25) des jets de liquides, ou pour refroidir les produits formés, et **en ce qu'**une autre ouverture (3b) est prévue pour l'élimination hors du boîtier de réacteur des produits formés et des gaz en excès.

6. Dispositif selon la revendication 5, **caractérisé en ce que** la première ouverture (3a) est alignée avec l'autre ouverture (3b).

7. Dispositif selon la revendication 5, **caractérisé en ce que** les pompes sont des pompes à haute pression permettant d'atteindre une pression supérieure à 50 bar, de préférence supérieure à 500 bars, notamment comprise entre 1 000 et 4 000 bar.

8. Dispositif selon la revendication 5, **caractérisé en ce que** les buses (1) sont des buses en céramique ou des buses en diamant.

9. Dispositif selon la revendication 5, **caractérisé en ce que** le diamètre des buses est inférieur à 2 mm, de préférence inférieur à 0,5 mm, notamment inférieur à 0,3 mm.

10. Dispositif selon la revendication 5, **caractérisé en ce que** les deux buses (1) sont implantées dans les côtés opposés d'une même pierre de buses (10) de telle sorte que les buses (1) sont dirigées directement l'une vers l'autre et qu'un premier perçage axial (22) dans le support de buses (10), dont le diamètre est plusieurs fois supérieur au diamètre des buses, relie les deux buses (1) et **en ce qu'**il est prévu un perçage radial supplémentaire (3a, 3b) dans le support de buses (10) dont le diamètre est également plusieurs fois supérieur au diamètre des buses.

11. Dispositif selon la revendication 5, **caractérisé en ce qu'**un récepteur de buses (13) est prévu qui est muni d'un premier perçage (23) dans lequel sont implantées de chaque côté des buses (1) constituées chacune d'un corps de buse et d'une pierre de buse (10) implantée dans celui-ci, et **en ce qu'**un second perçage (3) est prévu dans le récepteur de buses (13) décalé de 90° par rapport au premier perçage (23).

12. Dispositif selon la revendication 10 ou 11, **caractérisé en ce que** le corps de buses (11) a une forme conique aux deux extrémités munies de buses (1) et qu'il est fixé au moyen d'un collet double (33) entre deux lances tubulaires (31) usuelles dans la technique de découpe au jet d'eau ayant des extrémités coniques, et **en ce que** le collet double (33) est muni d'un perçage de sortie de produit (34) pour l'élimination du produit formé dans le corps de buses.

13. Dispositif selon la revendication 5, **caractérisé en ce que** les fluides liquides sont amenés pour réagir en un point de collision commun (25) par des pompes à travers deux buses (1) formées dans des disques (10b) en matériau à résistance mécanique élevée, les deux buses (1) étant pressées directement l'une contre l'autre et les deux buses (1), observées à travers les deux disques (10b) en matériau à résistance mécanique élevée, pouvant être traversées de part en part, les deux disques (10b) en matériau à résistance mécanique élevée portant chacun sur les surfaces qui se rejoignent un creux et possédant parallèlement aux surfaces un écoulement latéral (3).

14. Dispositif selon la revendication 5, **caractérisé en ce que** les deux fluides liquides sont amenés pour réagir en un point d'intersection liquide commun par des pompes à haute pression dans un corps de buse formé dans un disque en matériau à résistance mécanique élevée (10c), le disque en matériau à résistance mécanique élevée (10c) étant muni de deux perçages se croisant (1, 3) de diamètres différents, le perçage le plus fin (1) formant une paire de buses pouvant être utilisées des deux côtés et le perçage plus gros (3), qui peut être un trou traversant ou un trou borgne, servant à l'évacuation des produits de réaction, et **en ce que** le corps de buse ainsi formé est implanté dans un corps de buse métallique.

15. Dispositif selon la revendication 5, **caractérisé en ce que** le boîtier de réacteur peut être thermostaté.

16. Dispositif selon la revendication 5, **caractérisé en ce que** les conduites d'alimentation et / ou les buses sont conçues pour être thermostatées.
